(19) Europäisches Patentamt
European Patent Office
Office européen des brevets

(11) EP 1 265 943 B1

(12) EUROPÄISCHE PATENTSCHRIFT

(45) Veröffentlichungstag und Bekanntmachung des Hinweises auf die Patenterteilung:
**04.02.2004 Patentblatt 2004/06**

(21) Anmeldenummer: **01927691.4**

(22) Anmeldetag: **23.02.2001**

(51) Int Cl.[7]: **C08G 64/14**, C08L 69/00

(86) Internationale Anmeldenummer:
**PCT/EP2001/002043**

(87) Internationale Veröffentlichungsnummer:
**WO 2001/066615 (13.09.2001 Gazette 2001/37)**

(54) **POLYCARBONAT-FORMKÖRPER MIT VERBESSERTEN OPTISCHEN EIGENSCHAFTEN**

POLYCARBONATE MOULDED BODIES WITH IMPROVED OPTICAL PROPERTIES

CORPS MOULES EN POLYCARBONATE PRESENTANT DES PROPRIETES OPTIQUES AMELIOREES

(84) Benannte Vertragsstaaten:
**AT BE CH CY DE DK ES FI FR GB GR IE IT LI LU MC NL PT SE TR**

(30) Priorität: **08.03.2000 DE 10011278**

(43) Veröffentlichungstag der Anmeldung:
**18.12.2002 Patentblatt 2002/51**

(73) Patentinhaber: **Bayer Aktiengesellschaft
51368 Leverkusen (DE)**

(72) Erfinder:
- **ANDERS, Siegfried
51147 Köln (DE)**
- **RÖHNER, Jürgen
51069 Köln (DE)**
- **HAESE, Wilfried
51519 Odenthal (DE)**

(56) Entgegenhaltungen:
**EP-A- 0 649 724**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 265 943 B1

## Beschreibung

Die Erfindung betrifft Polycarbonat-Formkörper mit verbesserten optischen Eigenschaften.

Polycarbonat-Formkörper, insbesondere Polycarbonat-Massivplatten, werden durch Extrusion oder Spritzguss hergestellt. Größere Formkörper wie großflächige Kraftfahrzeugverglasungen müssen durch Extrusion hergestellt werden, weil die Erzeugung durch Spritzguss nur unter wirtschaftlich nicht vertretbaren hohen Drücken oder Werkzeugschließkräften erfolgen kann.

Zur Extrusion wird ein Polycarbonat-Granulat dem Extruder zugeführt und im Plastifizierungssystem des Extruders aufgeschmolzen. Die Kunststoffschmelze wird durch eine Breitschlitzdüse gedrückt, im Walzenspalt eines Glättkalanders in die gewünschte Form gebracht und durch wechselseitige Kühlung auf Glättwalzen und an der Umgebungsluft formfixiert. Die zur Extrusion verwendeten Polycarbonate mit hoher Schmelzviskosität werden üblicherweise bei Schmelzetemperaturen von 260 bis 300°C verarbeitet, entsprechend werden die Zylindertemperaturen des Plastifizierzylinders sowie die Düsentemperaturen eingestellt.

Die Oberflächen der erzeugten Platte sind prozessbedingt nicht vollkommen eben sondern weisen Unregelmäßigkeiten auf. Diese führen zu optischen Verzerrungen. Für verschiedene Anwendungen, beispielsweise Verscheibungen von Kraftfahrzeugen, sind solche optischen Verzerrungen unerwünscht, weshalb in der Vergangenheit bereits eine Reihe von Maßnahmen vorgeschlagen wurden, die optischen Eigenschaften von extrudierten Polycarbonatformkörpern zu verbessern.

Zur Verringerung von Spiegelungen und optischen Störungen von strukturierten, wetterfesten Platten schlägt die EP 0 275 252 A eine Polycarbonat-Verbundplatte vor, auf deren Oberfläche eine Schutzbeschichtung aufgebracht ist, die ein Methacrylat-Copolymer enthält.

Die EP 0 114 290 A beschreibt thermoplastische Copolyestercarbonat-Formmassen, die 1 bis 15 Gew.% eines verzweigten Polycarbonats und 15 bis 99 Gew.% eines Copolyestercarbonatharzes enthalten. Durch dieses Gemisch sollen die Verarbeitungseigenschaften und die Hydrolysebeständigkeit sowie die Schlagfestigkeit verbessert werden. Es wird festgestellt, dass die optische Transparenz des Polymers durch den Einsatz dieser Formmasse nicht wesentlich beeinträchtigt wird.

Die der Erfindung zugrundeliegende Aufgabe besteht darin, durch Extrusion hergestellte transparente Polycarbonat-Massivplatten mit derart verbesserten optischen Eigenschaften bereitzustellen, die den Einsatz in Kraftfahrzeugen zulassen.

Überraschend wurde festgestellt, dass diese Aufgabe durch Extrusion von Polycarbonatformmassen gelöst wird, die verzweigte Polycarbonate eines Molekulargewichts $\overline{M}_w$ von 25.000 bis 40.000, vorzugsweise von 28.000 bis 36.000, enthalten und die eine Melt Volume Rate (MVR) nach ISO 1133 von 2 bis 20 $cm^3$/10 Min. (300°C, 1,2 kg) aufweisen. Durch den Einsatz einer solchen Formmasse kann eine hohe Stabilität der Schmelze erreicht werden. Dadurch können die bisher üblichen optischen Verzerrungen der Platte vermieden werden, die durch die unterschiedlichen an der Oberseite und an der Unterseite der extrudierten Platte wirkenden Kräfte verursacht werden.

Die erfindungsgemäßen, extrudierten Polycarbonat-Massivplatten, die aus der zuvor dargestellten Formmasse erhältlich sind, weisen einen Ablenkwinkel $\alpha_\varepsilon$ (min) nach DIN 52305-A-AS von $\leq$ 2,0, vorzugsweise $\leq$ 1,5, und einen Brechwert $D_\varepsilon$ (min) nach DIN 52305-A-AZ von $\leq$ 0,05, vorzugsweise $\leq$ 0,03 auf.

Es wurde herausgefunden, dass der Ablenkwinkel $\alpha_\varepsilon$ um 40 %, und der Brechwert $D_\varepsilon$ um 70 % verringert werden kann gegenüber in herkömmlicher Weise erhaltenen Platten.

Durch diese deutlich verbesserten optischen Eigenschaften ist es möglich, die erfindungsgemäßen Platten als Kraftfahrzeugverglasung einzusetzten.

Erfindungsgemäß geeignete verzweigte Polycarbonate können nach bekannten Verfahren hergestellt werden. Geeignete Verfahren zur Herstellung von Polycarbonaten sind beispielsweise die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Die Herstellungsverfahren sind beispielsweise beschrieben in H. Schnell, "Chemistry and Physis of Polycarbonates", Polymer Reviews, Band 9, S. 31-76, Interscience Publishers, New York, London, Sidney, 1964. Die genannten Herstellungsverfahren sind auch beschrieben in "Polycarbonates" in Enzyclopedia of Polymer Science and Engineering, Volume 11, Second Edition, 1988, Seiten 648 bis 718 und in "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299.

Das Schmelzeumesterungsverfahren ist insbesondere beschrieben in H. Schnell, "Chemistry and Physis of Polycarbonates", Polymer Reviews, Band 9, S. 44 bis 51, Interscience Publishers, New York, Sidney, 1964 sowie in DE 1 031 512 A, US 3 022 272, US 5 340 905 und US 5 399 659.

Die erfindungsgemäß eingesetzten verzweigten Polycarbonate sind sowohl Homopolycarbonate als auch Copolycarbonate oder deren Gemische. Die Polycarbonate können teilweise oder vollständig durch aromatische Polyestercarbonate ersetzt sein.

Die erfindungsgemäß geeigneten Polycarbonate sind in bekannter Weise verzweigt, und zwar vorzugsweise durch den Einbau von trifunktionellen oder mehr als trifunktionellen Verzweigern. Geeignete Verzweiger sind beispielsweise solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri(4-hydroxyphenyl)-hepten-2, 4,6-Dimethyl-2,4,6-tri(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und $\alpha,\alpha',\alpha''$-Tris-(4-hydroxyphenol)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 bis 1 Mol%, vorzugsweise 0,2 bis 0,6 Mol%, bezogen auf Mol eingesetztes Bisphenol.

Die mittlere Molmasse der erfindungsgemäß zu verwendenden Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z. B. Phenol, p-Chlorphenol, p-tert.-Butylphenol, Cumylphenol oder 2,4,6-Tribromphenol sowie langkettige Alkylphenole wie 4-(1,1,3,3-Tetramethylbutyl)-phenol oder Monoalkylphenole oder Dialkylphenole mit insgesamt 8 bis 20 C-Atomen in den Alkylsubsitutenten wie 3,5-di-tert.-Butylphenol, p-tert.-Octylphneol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Die Menge an Kettenabbrecher zur Erzielung des gewünschten Molekulargewichtsbereichs liegt beim Phasengrenzflächenverfahren üblicherweise bei 2 bis 4 Mol-% Kettenabbrecher, bezogen auf Mol Bisphenol-A. Die Bemessung der Kettenabbrechermenge erfolgt bei der Herstellung nach dem Umesterungsverfahren dadurch, dass man den Kohlensäurediester, beispielsweise Diphenylcarbonat, im Verhältnis zum Bisphenol-A in Abhängigkeit von den verwendeten Destillationskolonnen im Überschuss einsetzt, beispielsweise 102 bis 108 Mol Diphenylcarbonat pro 100 Mol Bisphenol-A.

Geeignete UV-Absorber sind solche Verbindungen, die aufgrund ihres Absorptionsvermögens unterhalb 400nm in der Lage sind, Polycarbonat wirksam vor UV-Licht zu schützen und ein Molekulargewicht von mehr als 370, vorzugsweise von 500, und mehr aufweisen. UV-Absorber können in einer Menge von 0,05 bis 15 Gew.%, vorzugsweise 0,1 bis 8 Gew.%, bezogen auf das Gewicht der Formplatte, enthalten sein.

Geeignete UV-Absorber sind insbesondere die in der WO 99/05205 beschriebenen Verbindungen der Formel (I)

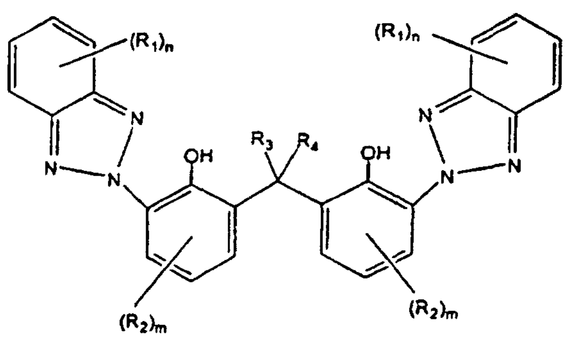

(I)

worin

$R^1$ und $R^2$ gleich oder verschieden sind und H, Halogen, $C_1$-$C_{10}$-Alkyl, $C_5$-$C_{10}$-Cycloalkyl, $C_7$-$C_{13}$-Aralkyl, $C_6$-$C_{14}$-Aryl, -$OR^5$ oder -(CO)-O-$R^5$ bedeuten mit $R^5$ = H oder $C_1$-$C_4$-Alkyl,

$R^3$ und $R^4$ ebenfalls gleich oder verschieden sind und H, $C_1$-$C_4$-Alkyl, $C_5$-$C_6$-Cycloalkyl, Benzyl oder $C_6$-$C_{14}$-Aryl bedeuten,

m 1, 2 oder 3 ist und

n 1, 2, 3 oder 4 ist,

sowie solche der Formel (II)

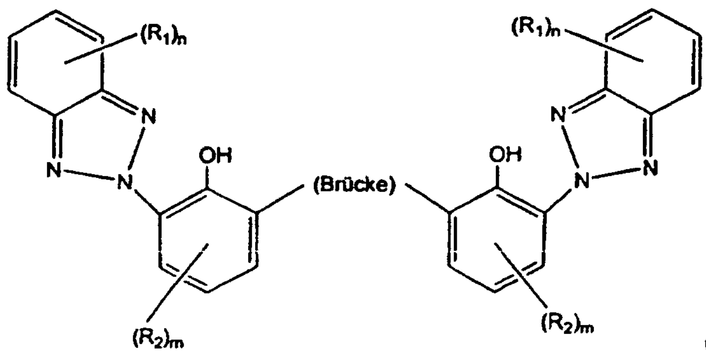

(II)

worin die Brücke

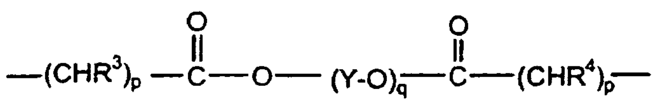

bedeutet,
$R^1$, $R^2$, m und n die für Formel (I) genannte Bedeutung haben,
worin außerdem p eine ganze Zahl von 0 bis 3 ist,

q eine ganze Zahl von 1 bis 10 ist,

Y $-CH_2-CH_2-$, $-(CH_2)_3-$, $-(CH_2)_4-$, $-(CH_2)_5-$, $-(CH_2)_6-$, oder $CH(CH_3)—CH_2—$ ist und

$R^3$ und $R^4$ die für Formel (I) genannte Bedeutung haben.

Weitere geeignete UV-Absorber sind solche, die substituierte Triazine darstellen, wie das 2,4-Bis(2,4-dimethylphenyl)-6-(2-hydroxy-4-n-octyloxyphenyl)-1,3,5-triazin (CYASORB® UV-1164) oder 2-(4,6-Diphenyl-1,3,5-triazin-2-yl)-5-(hexyl)oxyphenol (Tinuvin® 1577). Besonders bevorzugt als UV-Absorber ist 2,2-Methylenbis-(4-(1,1,3,3-tetrarnethylbutyl)-6-(2H-benztriazol-2-yl)phenol), das im Handel unter der Bezeichnung Tinuvin® 360 oder Adeka Stab® LA 31 vertrieben wird. Geeignet ist außerdem der nach der WO 96/15102, Beispiel 1 erhaltene UV-Absorber Uvinul® 3030 der allgemeinen Formel III

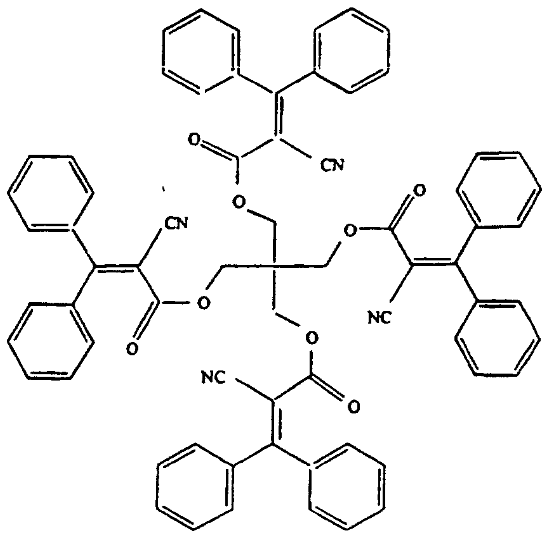

(III)

Geeignet sind außerdem die in EP 0500496 A1 genannten UV-Absorber.

Geeignete Stabilisatoren für die Polycarbonate sind beispielsweise Phosphine, Phosphite oder Si enthaltende Stabilisatoren und weitere in der EP 0 500 496 A1 beschriebene Verbindungen. Beispielhaft seien Triphenylphosphite, Diphenylalkylphosphite, Phenyldialkylphosphite, Tris-(nonylphenyl)phosphit, Tetrakis-(2,4-ditert.-butylphenyl)-4,4'-biphenylen-diphosponit und Triarylphosphit genannt. Besonders bevorzugt sind Triphenylphosphin und Tris-(2,4-di-tert.-butylphenyl)phosphit.

Ferner kann die erfindungsgemäß einzusetzende Formmasse Glycerinmono-fettsäureester enthalten. Diese werden vorzugsweise in Mengen von 0,01 bis 1 Gew. %, besonders bevorzugt 0,02 bis 0,3 Gew.%, bezogen auf das Gewicht der Formmasse, eingesetzt. Glycerinmonofettsäureester sind Ester des Glycerins mit gesättigten, aliphatischen $C_{10}$ bis $C_{26}$-Monocarbonsäuren, vorzugsweise mit gesättigten, aliphatischen $C_{14}$ bis $C_{22}$-Monocarbonsäuren. Als Glycerinmonofettsäureester sind sowohl die der primären OH-Funktion des Glycerins als auch die der sekundären OH-Funktion des Glycerins zu verstehen sowie Mischungen dieser beiden isomeren Verbindungsklassen. Die Glycerinmonofettsäureester können herstellungsbedingt weniger als 50 % unterschiedliche Diester und Triester des Glycerins enthalten.

Gesättigte, aliphatische Monocarbonsäuren mit 10 bis 26 C-Atomen sind beispielsweise Caprinsäure, Laurinsäure, Myristinsäure, Palmitinsäure, Stearinsäure, Arachinsäure, Behensäure, Lignocerinsäure und Cerotinsäure. Bevorzugte gesättigte, aliphatische Monocarbonsäuren mit 14 bis 22 C-Atomen sind beispielsweise Myristinsäure, Palmitinsäure, Stearinsäure, Arachinsäure und Behensäure. Besonders bevorzugte gesättigte, aliphatische Monocarbonsäuren sind Palmitinsäure und Stearinsäure.

Ferner kann die erfindungsgemäße Formmasse 0,01 bis 0,5 Gew.% der (Teil)Ester von vier- bis sechswertigen Alkoholen, insbesondere des Pentaerythrits enthalten.

Vierwertige Alkohole sind beispielsweise Pentaerythrit und Mesoerythrit. Fünfwertige Alkohole sind beispielsweise Arabit, Ribit und Xylit. Sechswertige Alkohole sind beispielsweise Mannit, Glucit (Sorbit) und Dulcit.

Die Ester sind die Monoester, Diester, Triester, Tetraester gegebenenfalls Pentaester und Hexaester oder deren Mischungen, insbesondere statistische Mischungen, aus gesättigten, aliphatischen $C_{10}$ bis $C_{26}$-Monocarbonsäuren, vorzugsweise mit gesättigten, aliphatischen $C_{14}$ bis $C_{22}$-Monocarbonsäuren. Die kommerziell erhältlichen Fettsäureester, insbesondere des Pentaerythrits, können herstellungsbedingt < 60 % unterschiedlicher Teilester enthalten.

Gesättigte, aliphatische Monocarbonsäuren mit 10 bis 26 C-Atomen sind beispielsweise Caprinsäure, Laurinsäure, Myristinsäure, Palmitinsäure, Stearinsäure, Arachinsäure, Behensäure, Lignocerinsäure und Cerotinsäure.

Bevorzugte gesättigte, aliphatische Monocarbonsäuren mit 14 bis 22 C-Atomen sind beispielsweise Myristinsäure, Palmitinsäure, Stearinsäure, Arachinsäure und Behensäure.

Besonders bevorzugt sind gesättigte, aliphatische Monocarbonsäuren wie Palmitinsäure und Stearinsäure.

Die gesättigten, aliphatischen $C_{10}$ bis $C_{26}$-Carbonsäuren und die erfindungsgemäß einzusetzenden Fettsäureester sind als solche entweder literaturbekannt oder nach literaturbekannten Verfahren herstellbar. Beispiele für Pentaerythritfettsäureester sind die der besonders bevorzugten, vorstehend genannten Monocarbonsäuren.

Besonders bevorzugt sind Ester des Pentaerythrits mit Stearinsäure und Palmitinsäure.

Es hat sich ferner als günstig erwiesen, den Polycarbonatformmassen Verbindungen der allgemeinen Formel (IV)

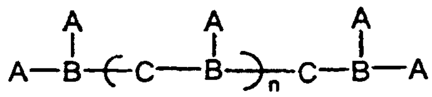

(IV)

zuzugeben, worin A ein $C_{10}$ bis $C_{4o}$-Fettsäurerest, vorzugsweise $C_{22}$ bis $C_{34}$-Fettsäurerest, B ein dreiwertiger Alkohol mit 3 bis 20, vorzugsweise 5 bis 10, Kohlenstoffatomen, C ein Dicarbonsäurerest mit 4 bis 40, vorzugsweise 5 bis 10, Kohlenstoffatomen und n eine ganze Zahl von 0 bis 15 bedeutet. Diese Verbindungen sind im Handel erhältlich.

Sie lassen sich problemlos mit Polycarbonaten verarbeiten und zeigen in den als Produkt erhaltenen Formkörpern keine Beeinträchtigungen. Überraschenderweise hat sich herausgestellt, dass bei Einsatz dieser Verbindungen als flüchtig bekannte Zusatzstoffe von Polycarbonatformmassen nicht mehr zu den zuvor beschriebenen Problemen führen. Vorzugsweise kann die Konzentration der erfindungsgemäß einzusetzenden Verbindungen der Formel (IV) in der Polycarbonatformmasse 0,02 bis 1 Gew.%, insbesondere 0,05 bis 0,6 Gew.%, bezogen auf das Gewicht der Formmasse, betragen.

Zur Modifizierung der Eigenschaften können den Formmassen weitere übliche Additive zugemischt und/oder auf die Oberfläche aufgebracht werden. Üblich Additive sind beispielsweise Füllstoffe, Verstärkungsstoffe, Stabilisatoren wieThermostabilisatoren, $\gamma$-Strahlenstabilisatoren, Antistatika, Fließhilfsmittel, Brandschutzmittel, Farbstoffe und Pigmente. Die genannten und weitere Additive sind beschrieben in Gächter, Müller, Kunststoff-Additive, 3. Ausgabe, Hanser-Verlag, München, Wien, 1989.

Beispiele für Antistatika sind kationaktive Verbindungen, beispielsweise quartäre Ammonium-, Phosphonium- oder Sulfoniumsalze, anionaktive Verbindungen, beispielsweise Alkylsulfonate, Alkylsulfate, Alkylphosphate, Carboxylate in Form von Alkali- oder Erdalkalimetallsalzen, nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Die erfindunsgemäßen massiven Formkörper können eine Dicke von 1 mm bis 15 mm aufweisen. Je nach Anwendungsgebiet können sie auch dicker sein. Die Formkörper können auch Verbundformkörper aus mindestens zwei massiven Formkörpem, beispielsweise Platten, sein, die durch Extrusion hergestellt wurden.

Fig.1 zeigt eine erfindungsgemäß erhaltene Massivplatte in einer Schräglinienprojektion nach DIN 52305.

Fig.2 zeigt eine nach herkömmlichen Verfahren durch Extrusion erhaltene Massivplatte in einer Schräglinienprojektion nach DIN 52305.

Zur Herstellung der Massivplatten durch Extrusion wird das Polycarbonatgranulat dem Fülltrichter eines Extruders zugeführt und gelangt über diesen in das Plastifiziersystem, bestehend aus Schnecke und Zylinder.

Im Plastifiziersystem erfolgt das Fördern und Aufschmelzen des Materials. Die Kunststoffschmelze wird durch eine Breitschlitzdüse gedrückt. Zwischen Plastifiziersystem und Breitschlitzdüse können eine Filtereinrichtung, eine Schmelzpumpe, stationäre Mischelemente und weitere Bauteile angeordnet sein. Die die Düse verlassende Schmelze gelangt auf einen Glättkalander. Im Walzenspalt des Glättkalanders erfolgt die endgültige Formgebung. Die Formfixierung erfolgt letztendlich durch Abkühlung und zwar wechselseitig auf den Glättwalzen und an der Umgebungsluft. Die weiteren Einrichtungen dienen dem Transport, dem Aufbringen von Schutzfolie, dem Ablängen und Ablegen der extrudierten Platten.

Im Fall einer Coextrusion wird in einem oder mehreren weiteren Extrudern das zu coextrudierende Material in gleicher Weise plastifiziert. Die Coexschmelze(n) wird (werden) in einem speziellen Coexadapter vor der Düse oder in einer speziellen Coexdüse mit dem Hauptmaterial zusammengeführt. Die Coexschicht kann sowohl einseitig wie auch auf beiden Seiten der Basisschicht aufgebracht werden. Eine nachträgliche Bearbeitung der Platten kann durch Thermoformen oder Warmverformen oder Oberflächenbehandlungen wie die Ausrüstung mit Kratzfestbeschichtungen, wasserspreitenden Schichten und anderen Funktionsschichten erfolgen.

Die erfindungsgemäßen Polycarbonat-Massivformkörper können ferner als Sicherheitsverscheibung, beispielsweise an Maschinen und in Stadien, als Verscheibung in Dächern, in Lärmschutzwänden und für Werbeflächen eingesetzt werden. Sie sind überall dort geeignet, wo großflächige Verscheibungen mit günstigen optischen Eigenschaften gewünscht werden.

Die Erfindung wird durch das folgende Beispiel weiter erläutert.

## Beispiel

Zur Extrusion von 6 mm dicken Polycarbonat-Massivplatten einer Breite von 600 mm werden ein lineares hochviskoses Polycarbonat, Makrolon® 3103, und ein verzweigtes Polycarbonat, Makrolon® KU 1-1243, eingesetzt.

Die verwendete Anlage besteht aus

- einem Extruder mit einer Schnecke von 75 mm Durchmesser (D) und einer Länge von 33xD. Die Schnecke weist eine Entgasungszone auf;
- einer Schmelzepumpe;
- einem Umlenkkopf;
- einer Breitschlitzdüse mit 600 mm Breite;
- einem Dreiwalzen-Glättkalander mit horizontaler Walzenanordnung, wobei die dritte Walze um ± 45° gegenüber der Horizontalen schwenkbar ist;
- einer Rollenbahn;
- einer Einrichtung zum beidseitigen Aufbringen von Schutzfolie;
- eine Abzugseinrichtung;
- einer Ablängvorrichtung (Säge);
- einem Ablagetisch.

Beide Polycarbonate weisen eine Melt Volume Rate (MVR) von etwa 6 $cm^3$/10 Min (300°C/1,2 kg) auf, gemessen nach ISO 1133. Jedoch wird Makrolon® KU 1-1243 wegen der geringeren Schmelzviskosität im Schergeschwindigkeitsbereich ≥ 100 $s^{-1}$, in dem plastifiziert wird, mit niedrigerer Schmelzetemperatur, wie aus der folgenden Tabelle 1 ersichtlich, extrudiert.

Von der Düse gelangt die Schmelze auf den Glättkalander, dessen Walzen die in der Tabelle 1 genannte Temperatur aufweisen. Auf dem Glättkalander erfolgt die endgültige Formgebung und Abkühlung des Materials. Anschließend wird die Platte durch einen Abzug transportiert, es wird die Schutzfolie beidseitig aufgebracht, danach erfolgt die Ablängung mittels Säge und Ablage der Platten.

Tabelle 1

| Vergleich Verfahrensparameter | | Standard Makrolon® 3103 | Erfindung Makrolon® KU 1-1243 |
|---|---|---|---|
| Heizzone | | | |
| 1 | Extruder Z1 | 300°C | 270°C |
| 2 | Extruder Z2 | 300°C | 270°C |
| 3 | Extruder Z3 | 270°C | 250°C |
| 4 | Extruder Z4 | 260°C | 240°C |
| 5 | Extruder Z5 | 265°C | 240°C |
| 6 | Extruder Z6 | 280°C | 250°C |
| 10 | Umlenkkopf | 280°C | 250°C |
| 12 | Düse/Seitenplatte | 280°C | 270°C |
| 13 | Düse | 280°C | 260°C |
| 14 | Düse | 280°C | 260°C |
| 15 | Düse | 280°C | 260°C |
| 16 | Düse/Seitenplatte | 280°C | 270°C |
| 17 | Düse | 280°C | 260°C |
| 18 | Düse | 280°C | 260°C |
| 19 | Düse | 280°C | 260°C |
| Vergleich Verfahrensparameter | | Standard Makrolon® 3103 | Erfindung Makrolon® KU 1-1243 |
| Meßwerte | | | |
| | Drehzahl Extruder | 96 $min^{-1}$ | 83 $min^{-1}$ |
| | Massetemperatur Rohr | 304°C | 288°C |
| | Druck im Rohr | 24 bar | 30 bar |

Tabelle 1 (fortgesetzt)

| Vergleich Verfahrensparameter | | Standard Makrolon® 3103 | Erfindung Makrolon® KU 1-1243 |
|---|---|---|---|
| Meßwerte | | | |
| | | | |
| | Drehzahl Pp | 106 $min^{-1}$ | 106 $min^{-1}$ |
| | | | |
| | Temperatur Walze 1 | 121°C | 121°C |
| | Temperatur Walze 2 | 124°C | 124°C |
| | Temperatur Walze 3 | 126°C | 126°C |
| | | | |
| | Kalandergeschwindigkeit | 0,540 m/min | 0,530 m/min |
| | | | |
| | Durchsatz | 150 kg/h | 150 kg/h |
| | Breite/Dicke | 600 mm/6 mm | 600 mm/6 mm |

Die verbesserten optischen Eigenschaften der erfindungsgemäß durch Extrusion erhaltenen massiven Platten sind in der Tabelle 2 dargestellt.

Tabelle 2

| Platte aus | Ablenkwinkel $\alpha_\varepsilon$ (Min) DIN 52305-A-AS | Brechwert $D_\varepsilon$ (Min) DIN 52305-A-AZ |
|---|---|---|
| Makrolon® 3103 | 2,14 | 0,0720 |
| Makrolon® KU 1-1243 | 1,28 | 0,0210 |

Kleinere Werte für $\alpha_\varepsilon$ und $D_\varepsilon$ dokumentieren die verringerte optische Verzerrung der erfindungsgemäß erhaltenen Platten aus Makrolon® KU 1-1243.

Fig. 1 und 2 dokumentieren visuell die erfindungsgemäß erzielte Wirkung an Hand einer Schräglinienprojektion nach DIN 52305 ($\varepsilon$ = 55°).

## Patentansprüche

1. Polycarbonat-Massivformkörper mit einem Ablenkwinkel $\alpha_\varepsilon$ (min) nach DIN 52305-A-AS von ≤ 2,0 und einem Brechwert $D_\varepsilon$ (min) nach DIN 52305-A-AZ von ≤ 0,05, erhältlich aus einer ein verzweigtes Polycarbonat eines mittleren Molekulargewichts $\overline{M}_w$ von 25.000 bis 40.000 enthaltenden Formmasse einer Melt Volume Rate (MVR) von 2 bis 20 $cm^3$/10 min. (300°C; 1,2kg) nach ISO 1133.

2. Polycarbonat-Massivformkörper nach Anspruch 1, **dadurch gekennzeichnet, dass** ein Polycarbonatverzweiger in einer Menge von 0,05 bis 1 Mol%, insbesondere 0,2 bis 0,6 Mol%, bezogen auf Mol eingesetztes Bisphenol enthalten ist.

3. Polycarbonat-Massivformkörper nach Anspruch 1 oder 2, **dadurch gekennzeichnet, dass** der Ablenkwinkel $\alpha_\varepsilon$ (min) nach DIN 52305-A-AS ≤ 1,5 und der Brechwert $D_\varepsilon$ (min) nach DIN 52305-A-AZ ≤ 0,03 ist.

4. Polycarbonat-Massivformkörper nach einem der Ansprüche 1 bis 3, **dadurch gekennzeichnet, dass** die Melt Volume Rate (MVR) von 3 bis 15 $cm^3$/10 min. (300°C; 1,2kg) nach ISO 1133 beträgt.

5. Poiycarbonat-Massivfonnkörper nach einem der Ansprüche 1 bis 4, **dadurch gekennzeichnet, dass** er aus mindestens zwei Polymerschichten aufgebaut ist.

6. Polycarbonat-Massivformkörper nach einem der Ansprüche 1 bis 5, **dadurch gekennzeichnet, dass** mindestens auf einer Seite des Formkörpers wenigstens eine Funktionsschicht ausgebildet ist.

7. Polycarbonat-Massivformkörper nach einem der Ansprüche 1 bis 6, **dadurch gekennzeichnet, dass** die Funktionsschicht eine Kratzfestbeschichtung ist.

8. Polycarbonat-Massivformkörper nach einem der Ansprüche 1 bis 7, **dadurch gekennzeichnet, dass** die Funktionsschicht eine Schutz gegen UV-Licht und Bewitterung liefernde Schicht ist.

9. Kraftfahrzeugverglasung, enthaltend einen Palycarbonat-Massivformkörper nach einem der Ansprüche 1 bis 8.

10. Verwendung eines Polycarbonat-Massivformkörpers nach einem der Ansprüche 1 bis 8 als Sicherheitsverscheibung, als Verscheibung in Dächern, Lärmschutzwänden und für Werbeflächen.

## Claims

1. Polycarbonate solid moulding having an angle of deflection $\alpha_\varepsilon$ (min) in accordance with DIN 52305-A-AS of ≤ 2.0 and a refractive index $D_\varepsilon$ (min) in accordance with DIN 52305-A-AZ of ≤ 0.05, obtainable from a moulding composition which contains a branched polycarbonate having an average molecular weight $\overline{M}_w$ of 25,000 to 40,000 and has a melt volume rate (MVR) of 2 to 20 $cm^3$/10 min (300°C; 1.2 kg) in accordance with ISO 1133.

2. Polycarbonate solid moulding according to claim 1, **characterised in that** it contains a polycarbonate branching agent in a quantity of 0.05 to 1 mol.%, in particular 0.2 to 0.6 mol.%, based on mol of bisphenol used.

3. Polycarbonate solid moulding according to claim 1 or 2, **characterised in that** the angle of deflection $\alpha_\varepsilon$ (min) in accordance with DIN 52305-A-AS is ≤ 1.5 and the refractive index $D_\varepsilon$ (min) in accordance with DIN 52305-A-AZ is ≤ 0.03.

4. Polycarbonate solid moulding according to any one of claims 1 to 3, **characterised in that** the melt volume rate (MVR) is 3 to 15 $cm^3$/10 min (300°C; 1.2 kg) in accordance with ISO 1133.

5. Polycarbonate solid moulding according to any one of claims 1 to 4, **characterised in that** it is built up from at least two polymer layers.

6. Polycarbonate solid moulding according to any one of claims 1 to 5, **characterised in that** at least one functional layer is formed on at least one side of the moulding.

7. Polycarbonate solid moulding according to any one of claims 1 to 6, **characterised in that** the functional layer is a scratch-resistant coating.

8. Polycarbonate solid moulding according to any one of claims 1 to 7, **characterised in that** the functional layer is a layer providing protection against UV light and weathering.

9. Motor vehicle glazing, containing a polycarbonate solid moulding according to any one of claims 1 to 8.

10. Use of a polycarbonate solid moulding according to any one of claims 1 to 8 as safety glazing, as glazing in roofs, in noise barriers and for advertising spaces.

## Revendications

1. Corps moulé compact de polycarbonate avec un angle de déflexion $\alpha_\varepsilon$ (min) selon la norme DIN 52305-A-AS de ≤ 2,0 et un indice de réfraction Dε (min) selon la norme DIN 52305-A-AZ de ≤ 0,05, susceptible d'être obtenu à partir d'une masse moulée contenant un polycarbonate ramifié d'une masse moléculaire moyenne $M_w$ de 25 000 à 40 000 d'un taux volumique de fusion (MVR) de 2 à 20 $cm^3$/10 min (300°C ; 1,2 kg) selon la norme ISO 1133.

2. Corps moulé compact de polycarbonate selon la revendication 1, **caractérisé en ce qu'**un agent de ramification

de polycarbonate est contenu en une quantité de 0,05 à 1 % en moles, en particulier 0,2 à 0,6 % en moles rapporté aux moles de bisphénol utilisé.

3. Corps moulé compact de polycarbonate selon la revendication 1, **caractérisé en ce** l'angle de déflexion $\alpha_\varepsilon$ (min) selon la norme DIN 52305-A-AS est ≤ 1,5 et l'indice de réfraction Dε (min) selon la norme DIN 52305-A-AZ est ≤ 0,03.

4. Corps moulé compact de polycarbonate selon l'une des revendications 1 à 3, **caractérisé en ce que** le taux volumique de fusion (MVR) est de 3 à 15 $cm^3$/10 min (300°C ; 1,2 kg) selon la norme ISO 1133.

5. Corps moulé compact de polycarbonate selon l'une des revendications 1 à 4, **caractérisé en ce qu'**il est constitué d'au moins deux couches de polymère.

6. Corps moulé compact de polycarbonate selon l'une des revendications 1 à 5, **caractérisé en ce qu'**au moins une couche fonctionnelle est formée sur une face du corps moulé.

7. Corps moulé compact de polycarbonate selon l'une des revendications 1 à 6, **caractérisé en ce que** la couche fonctionnelle est un revêtement résistant à l'abrasion.

8. Corps moulé compact de polycarbonate selon l'une des revendications 1 à 7, **caractérisé en ce que** la couche fonctionnelle est une protection contre la lumière UV et une couche fournissant une résistance aux intempéries.

9. Vitrage de véhicule automobile contenant un corps moulé compact en polycarbonate selon l'une des revendications 1 à 8.

10. Utilisation d'un corps moulé compact selon l'une des revendications 1 à 8 comme vitrage de sécurité, comme vitrage dans des toits, comme parois anti-bruit et pour des panneaux d'affichage.

Fig. 1

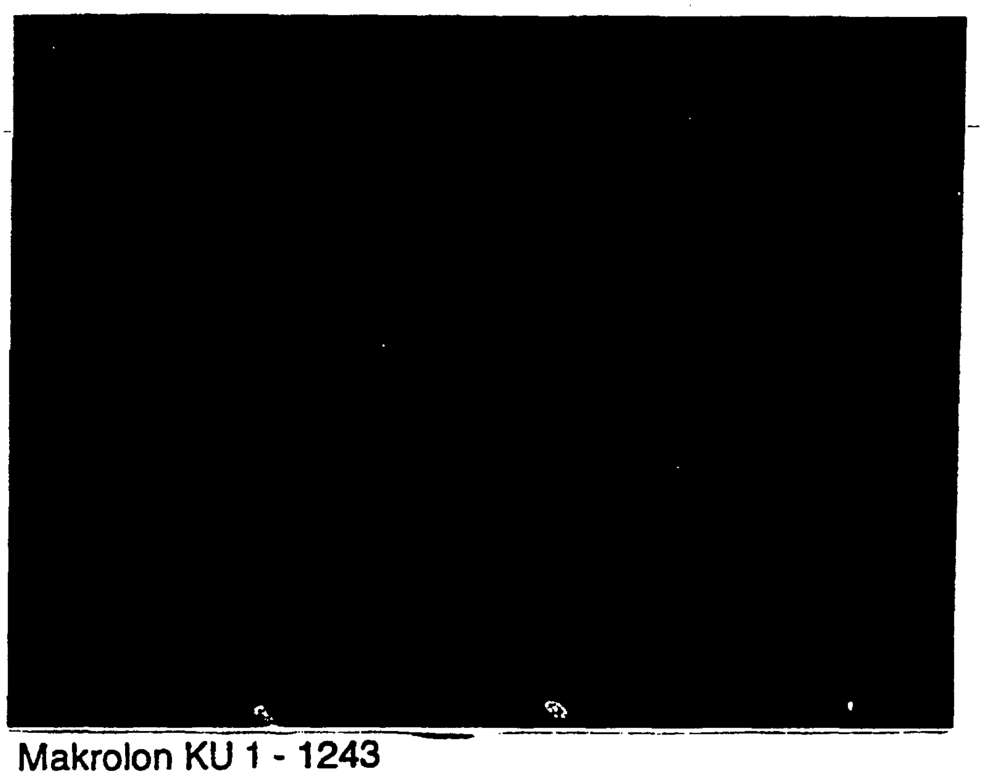

Makrolon KU 1 - 1243

Fig. 2

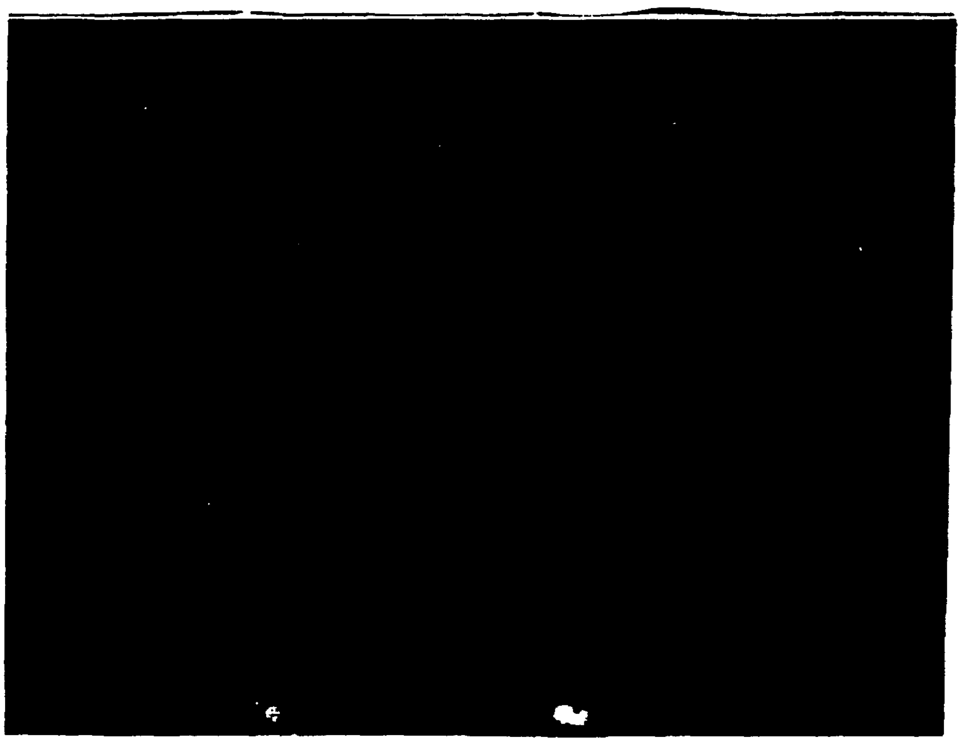

Makrolon 3103